# EUROPÄISCHE PATENTANMELDUNG

(11) **EP 1 263 103 A2**
(43) Veröffentlichungstag der Anmeldung: **04.12.2002**
(21) Anmeldenummer: 02450102.5
(22) Anmeldetag: 25.04.2002
(51) Int. Cl.: H02G 3/04

(54) **Befestigungsanordnung für Kabel**

(30) Priorität: 01.06.2001 AT 4482001
(71) Anmelder: Gatterbauer, Rupert, Jun., 5270 Mauerkirchen (AT)
(72) Erfinder: Gatterbauer, Rupert, Jun., 5270 Mauerkirchen (AT)
(74) Vertreter: Hübscher, Helmut, Dipl.-Ing.

(57) **Zusammenfassung**

Eine Befestigungsanordnung für Kabel besteht aus einem Halterungsprofil (1) mit rinnenförmigen Klemm- oder Einlegehalterungen (4) für jedes Kabel und einem das Halterungsprofil (1) zu einem geschlossenen Hohlkörper in Form einer Leiste ergänzenden, aufschnappbaren Abdeckprofil (2). In seiner Hauptform ist das Abdeckprofil (2, 2a) an seinem einen Rand mit einer angepaßten Aufnahme (9) unter Bildung einer Schwenkverbindung in eine runde Endverdickung (7) eines vorstehenden Randflansches (6) des über Befestigungselemente an einer Wand, Wandverkleidung oder Raumdecke befestigbaren Halterungsprofiles (1) einhängbar und in der Schließstellung im anderen Randbereich über federnde Rastschenkel (16, 17) der Schnapphalterung am Halterungsprofil (1) befestigbar. Bei einer um Ecken führenden Befestigungsanordnung schließen an die bis zu den Eckbereichen herangeführten Halterungsprofile (1) Eckprofile (29) an, bei welchen die Kabel im Bogen um die Ecke geführt werden können und für die eigene, an die Abdeckprofile anschließende Eckabdeckungen (33) vorgesehen sind. Anschlußmöglichkeiten für Steckdosen und ähnliche Elemente, Sonderformen der Befestigungsanordnung bei verringertem Platzbedarf und Befestigungsanordnungen in Wandvertiefungen oder - schlitzen sind angegeben.

## Beschreibung

Die Erfindung bezieht sich auf eine Befestigungsanordnung für Kabel, bestehend aus einem Halterungsprofil mit rinnenförmigen Klemm- oder Einlegehalterungen für jedes Kabel und einem das Halterungsprofil zu einem geschlossenen Hohlkörper in Form einer Leiste ergänzenden, aufschnappbaren Abdeckprofil.

Derartige Befestigungsanordnungen werden für die nachträgliche Verlegung von Kabeln und auch dann verwendet, wenn die Wahrscheinlichkeit besteht, daß bestehende Kabelverbindungen ausgewechselt oder durch weitere Kabel ergänzt werden sollen, wie dies im Zuge der immer stärker werdenden Vernetzung von Kommunikationseinrichtungen in Büros, aber auch bei sonstigen Anwendungen der Fall ist. Die Befestigungsanordnung kann durch verschiedene Profilformen, insbesondere des Abdeckprofiles die Gestalt einer Zier- oder Sesselleiste erhalten und auch in der Einfärbung bzw. Oberflächenstruktur an den jeweiligen Raum angepaßt werden.

Bekannte Befestigungsanordnungen dieser Art benützen als Halteprofil ein einfaches Rinnenprofil, das die Klemm- oder Einlegehalterungen einteilig angeformt hat und ein im wesentlichen nur einen Deckel bildendes Abdeckprofil, das mit beiden Rändern aufgeschnappt ist und bei Änderungen in der Leitungsführung zur Gänze abgenommen werden muß. Im Bereich von Raumecken oder sonstigen stärkeren Umleitungen in der Gesamtführung der Befestigungsanordnung werden die Halterungsprofile bis an das Eck herangeführt und die an den aufschnappbaren Abdeckprofilen entstehende Eckfuge wird durch eine zusätzliche Eckabdeckung geschützt. Nachteilig ist hier, daß im Eckbereich keine ordnungsgemäße Abstützung für das bzw. die Kabel gegeben ist und insbesondere die Gefahr besteht, daß empfindlichere Kabel an der Ecke geknickt werden. Ein Nachziehen solcher geknickter Kabel ist praktisch unmöglich. Ein weiteres Problem der bekannten Befestigungsanordnungen ergibt sich dann, wenn bereits bei der Anbringung oder auch nachträglich sich die Notwendigkeit ergibt, ein oder mehrere Kabel herauszuführen oder auch an solche Kabel Anschluß- oder Verbindungsteile, z. B. Steckdosen usw., anzuschließen. In manchen Fällen, z.B. bei der Kabelumleitung um Türöffnungen, ist die sonst angestrebte möglichst flache Form der Befestigungsanordnung aus ästhetischen Gründen oder auch rein aus Platzgründen nur schwer einsetzbar und schließlich ergibt sich bei dünnen Wänden bzw. bei Wänden, die aus relativ dünnen Bauplatten aufgebaut sind, noch das Problem, daß eine Befestigung des Halterungsprofiles mit den sonst üblichen Befestigungsmitteln, nämlich Nagelung, Schraubung oder Andübelung, nicht oder nur kaum möglich wird.

Aufgabe der Erfindung ist es, hier Abhilfe zu schaffen und eine an verschiedene Aufgaben anpaßbare Befestigungsanordnung anzugeben, bei der sowohl ein ausreichender Schutz der verlegten Kabel gewährleistet ist, Kabelbeschädigungen vermieden, als auch nachträgliche Ergänzungen und Änderungen in der Kabelführung erleichtert werden. Eine Teilaufgabe der Erfindung besteht darin, die Möglichkeit zu schaffen, Ausleitungen, Steckverbindungen usw. auch nachträglich in das System integrieren zu können, das Problem bei Kabelumleitungen um Türöffnungen usw. zu lösen und schließlich eine einfache Möglichkeit zur Anbringung der Befestigungsanordnung an dünnen Wänden, Bauplatten u. dgl. anzugeben bzw. hier die Befestigungsanordnung in die Wand zu integrieren.

Die gestellte Aufgabe wird prinzipiell dadurch gelöst, daß das Abdeckprofil an seinem einen Rand mit einer angepaßten Aufnahme unter Bildung einer Schwenkverbindung in eine runde Endverdickung eines vorstehenden Randflansches des über Befestigungselemente an einer Wand, Wandverkleidung oder Raumdecke befestigbaren Halterungsprofiles einhängbar und in der Schließstellung im anderen Randbereich über federnde Rastschenkel der Schnapphalterung am Halterungsprofil befestigbar ist, und daß bei einer um Ecken führenden Befestigungsanordnung an die bis zu den Eckbereichen herangeführten Halterungsprofile Eckprofile anschließbar, insbesondere ansteckbar sind, bei welchen die Kabel im Bogen um die Ecke geführt werden können und für die eigene, an die Abdeckprofile anschließende Eckabdeckungen vorgesehen sind.

Bei der erfindungsgemäßen Ausführung kann das Abdeckprofil im Bedarfsfall nur auf- bzw. abgeklappt werden, so daß sowohl das Öffnen der Befestigungsanordnung erleichtert wird als auch bei einem nachträglichen Schließen des Abdeckprofiles keine zusätzlichen Arbeiten für eine Längsausrichtung gegenüber dem Halterungsprofil anfallen. Ganz entscheidend bei der erfindungsgemäßen Ausführung ist aber, daß erstmalig auch im Eckbereich eine die Kabel schonenede Umlenkung im weichen Bogen ermöglicht wird.

Bei der Normalkonstruktion wird man dann, wenn ausreichend Platz zur Verfügung steht, auch im Eckprofil Einlegehalterungen vorsehen, die im Bogen um die Ecke führen. Falls eine engere Eckumlenkung erwünscht oder notwendig ist, kann man diese Einlegehalterungen innerhalb des Eckprofiles reduzieren oder ganz weglassen, dabei aber den Hohlraum innerhalb des Eckprofiles dazu ausnützen, hier die Kabel im Bogen zu führen. Allfällige Abschirmungen für ein besonders zu schützendes Kabel wird man trotzdem auch im Eckprofil anbringen.

Zur Lösung der ersten angegebenen Teilaufgabe wird vorgesehen, daß für die Anbringung von Schaltern, Steckdosen, Steckerbuchsen, Kabelausleitungen u. dgl. Halteelemente vorgesehen sind, die in ihrem Anbringungsbereich das Abdeckprofil ersetzen, ausgehend von dem die Endverdickung aufweisenden Randbereich des Halteprofiles, dieses Halteprofil vorzugsweise an der anderen Seite überragend einen zum Halteprofil offenen Hohlraum umschließen, mit einer Aufnahme in die Endverdickung des Randflansches des Halteprofiles schwenkbar einhängbar sind, in Seitenwänden an die Außenkonturen des Abdeckprofiles angepaßte Ausschnitte mit Rastvorsprüngen der Schnapphalterung aufweisen und wenigstens eine z. B. nach einer Sollbruchstelle freigebbare Montageöffnung zur Anbringung des Schalters od. dgl. bzw. einer für die Aufnahme des Schalters od. dgl. bestimmten Montagedose aufweisen oder mit einer eine derartige Dose ersetzenden, nach außen offenen Montagevertiefung versehen sind. Die Handhabung der statt eines Teilstückes des Abdeckprofiles einsetzbaren Halteelemente ist äußerst einfach, da sie genauso wie die Abdeckprofile selbst schwenkbar eingehängt und durch die Schnapphalterung fixiert werden. Die Außenform richtet sich nach den jeweiligen Bedürfnissen, doch wird man für verschieden große zu befestigende Steck-, Anschluß- oder Verbindungselemente bzw. deren Haltedosen möglichst Sollbruchstellen vorsehen, die verschieden große Ausbruchsöffnungen ermöglichen bzw. nach einer anderen Variante dosenartige Ausformungen direkt im Halteelement vorsehen. Durch das Aufklappen des Halteelementes wird der gesamte Kabelstrang sichtbar und für Anschlußarbeiten zugänglich.

Eine derzeit insbesondere für Steckdosenverbindungen bevorzugte Ausführungsform ergibt sich dadurch, daß die Seitenwände des Halteelementes die Grundform etwa rechtwinkeliger Dreiecke aufweisen, die in der Endmontagestellung mit der Hypothenusenseite zum Halteprofil weisen und dieses vorzugsweise nach oben überragen, wobei an die längere vom unteren Rand ausgehende Kathetenseite eine Deckwand anschließt und an der von dieser zur Anbringungswand ansteigenden zweiten Kathetenwand ein die Montageöffnung bzw. - vertiefung vorgesehen ist. Das Halteelement schließt auch im Überstandsbereich über das Halterungsprofil mit der Wandung, an dem dieses Halterungsprofil befestigt ist, einen geschützten Hohlraum ein. Allenfalls kann man auch im Anbringungsbereich des Schalters am Halterungsprofil eine zusätzliche Rückwand zum Abschluß des erwähnten Hohlraumes anbringen.

Zur Lösung der zweiten erwähnten Teilaufgabe wird zur Erzielung einer verringerten Breite, z. B. im Bereich von Kabelumleitungen und Türöffnungen eine Sonderform der Befestigungsanordnung vorgesehen, bei der das Halterungsprofil die Grundform eines Winkelprofiles mit an den Profilschenkeln angebrachten Kabelhalterungen aufweist, das aufschnappbare Abdeckporifl dieses Halterungsprofil zu einer hohlen Leiste, insbesondere Zierleiste, ergänzt und für eine allfällige Eckverbindung mit einer die Normalform aufweisenden Befestigungsanordnung eine Sonderform des Eckprofiles mit an den Anschlußseiten der beiden Abschnitte der Befestigungsanordnungen an deren Querschnitt- bzw. Öffnungsform angepaßte Anschlüsse vorgesehen sind.

Dabei können bei im Zuge der Sonderform vorgesehenen Eckumleitungen die Halterungs- und Abdeckprofile auf Gehrung zugeschnitten stoßen. Vorzugsweise werden aber die Kabelhalterungen in der Nähe der Ecke wenigstens teilweise entfernt, um Platz für eine bogenförmige Führung der Kabel zu schaffen. Kabelabschirmungen können auf die Kabel selbst aufgesteckt werden.

Für eine in Wandungsschlitze wenigstens teilweise versenkte Anbringung der Befestigungsanordnung das Halterungsprofil ist dieses erfindungsgemäß als Rinnenprofil mit auskragenden, die Teile der Schwenkverbindung und Schnapphalterung tragenden, am Schlitzrand aufliegenden Randflanschen ausgebildet, wobei die Klemm- oder Einlegehalterungen für die Kabel am Rinnenboden angebracht sind. Um Probleme, die sich durch schlechte Anbringbarkeit herkömmlicher Befestigungsmittel ergeben können, zu beseitigen und die Endmontage der Befestigungsanordnung zu beschleunigen, können an der Außenseite der Rinnenseitenschenkel des Halterungsprofiles Rastvorsprünge zum abstandsweisen Aufschnappen auf im Wandungsschlitz vormontierbare Halteelemente vorgesehen sein.

Nach einer Sonderkonstruktion für die Anbringung der Befestigungsanordnung in zwischen relativ dünnen, rückseitig freigestellten Wandelementen gebildeten Schlitzen weisen die vorgesehenen Halteelemente selbst eine an die Außenform des Rinnenprofiles angepaßte Profilform mit Gegenrasten für die Rastvorsprünge und angeformte, die Rückseite der Wandelemente übergreifenden federnden Stützschenkel auf.

Weitere Vorteile des Erfindungsgegenstandes entnimmt man der nachfolgenden Zeichnungsbeschreibung. In der Zeichnung ist der Erfindungsgegenstand beispielsweise dargestellt. Es zeigen:
Fig. 1 - 3 ein Teilstück einer die Grundform aufweisenden, erfindungsgemäßen Befestigungsanordung mit einer über ein Halteelement befestigbaren Steckdose in Vorderansicht und im Schnitt in der Endmontagestellung sowie in der aufgeklappten Anbringungsstellung,
Fig. 4 eine Gesamtübersicht einer um eine Türöffnung umgeleiteten Befestigungsanordung,
Fig. 5 als Detail dazu einen Querschnitt im Bereich der Türzarge,
Fig. 6 eine der Fig. 5 entsprechende Darstellung im Bereich der Eckumlenkung,
Fig. 7 eine Vorderansicht zu Fig. 6 und die
Fig. 8 und 9 eine in einem Schlitz zwischen relativ dünnen Wandelementen angebrachte Befestigungsanordung bei geschlossenem und geöffnetem Abdeckprofil.

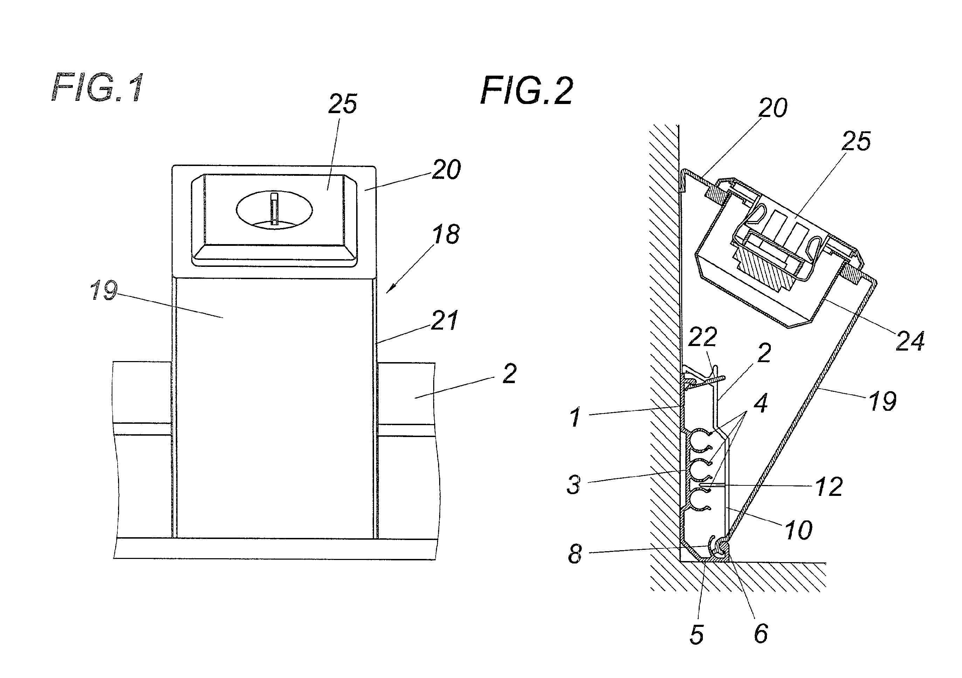

Nach den Fig. 1 bis 3 besitzt die hier vorgesehene Grundform der Befestigungsanordnung ein Halterungsprofil 1 und ein Abdeckprofil 2. Das Halterungsprofil 1 hat in der Grundfform einen L-förmigen Querschnitt, wobei der längere Schenkel im Mittelbereich 3 vorspringend abgesetzt ist und rinnenförmige und federnde Klemmhalterungen 4 für das Einlegen je eines Kabels aufweist. Der untere, kürzere Schenkel 5 trägt am Ende einen hochstehenden Flansch 6 mit einer runden Endverdickung 7 und im Abstand von dieser runden Endverdikkung einen federnden Steg 8.

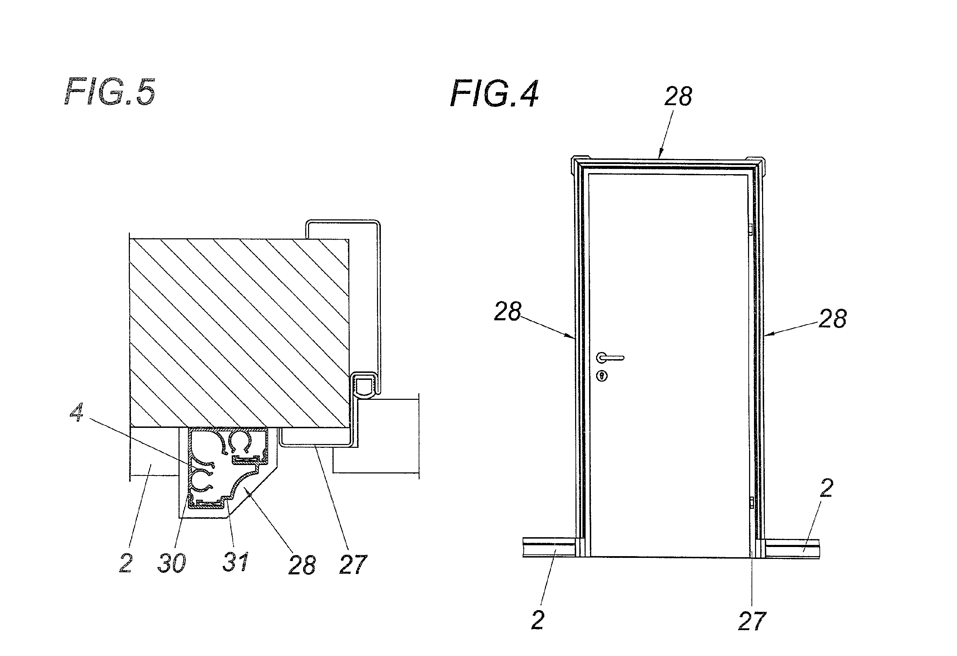

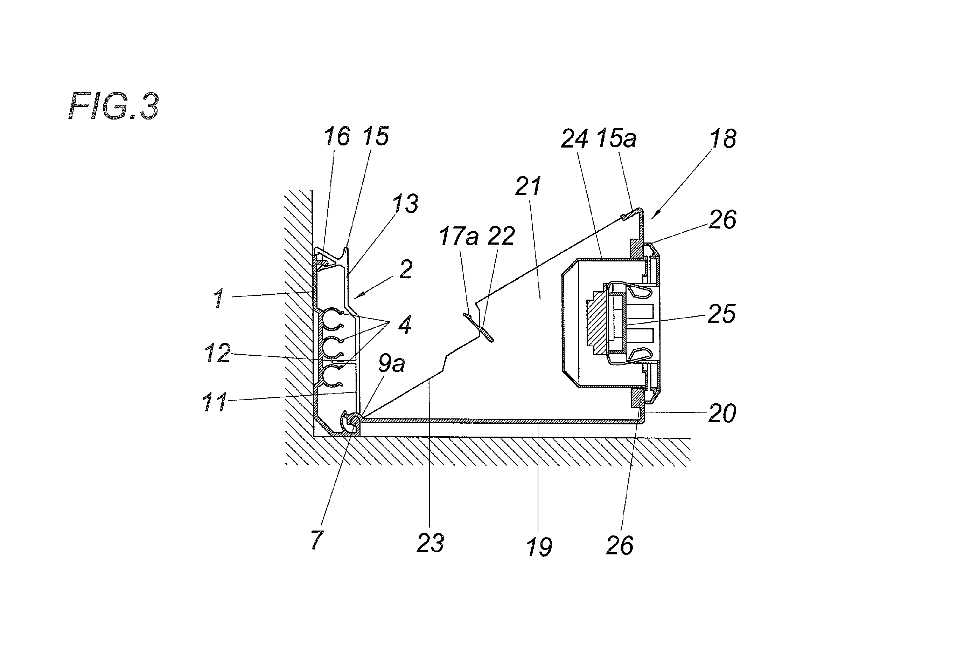

Bei der wegen ihres größeren Maßstabes übersichtlicheren Darstellung nach den Fig. 8 und 9 ist das Halterungsprofil 1a als Rinnenprofil ausgeführt und das Abdeckprofil 2a bildet eine Zierleiste, die sich von der flachen Form des Abdeckprofiles 2 unterscheidet.

Das Abdeckprofil 2, 2a trägt am unteren Rand eine halbrunde Sicke 9 und von dieser vorstehend eine für den Eingriff in den Steg 8 bestimmte Leiste 10. Wie die Fig. 2, 3, 8 und 9 zeigen, drückt die Leiste 10 nach dem Einhängen der Sicke 9 in die Verdickung 7 bereits beim leichten Hochschwenken des Abdeckprofiles 2 gegen den nun als Bremse wirkenden Steg 8. Nach Fig. 2 und 3 ragt vom Mittelbereich 11 und nach den Fig. 8 und 9 vom unteren Randbereich des Abdeckprofiles 2a ein Abschirmsteg 12 vor, der, wie Fig. 2 und 8 zeigen, zwischen zwei Klemmhalterungen 4 einrastet. Im Bereich 13 ist das Abdeckprofil 2, 2a am Ende zu einer Griffleiste 14 und einem Abdeckschenkel 15 geformt, der einen Randsteg 16 des Profiles 1 übergreift, wobei ein federnder Rastschenkel 17 unter Bildung einer Schnapphalterung ein verdicktes Ende des Randsteges 16 untergreift.

Gemäß Fig. 1 - 3 ist ein Teilstück des Abdeckprofiles 2 durch ein Halteelement 18 ersetzt, das zwei rechtwinkelig zueinander verlaufende Frontwände 19, 20 und zwei Seitenwände 21 aufweist, wobei die Frontwand 19 im unteren Randbereich mit der Sicke 9a für den Eingriff in die Verdickung 7 versehen wird. Die Seitenwände 21 haben dreieckige Grundform und sind durch eine Querleiste 22 verbunden, die den federnden Rastschenkel 17a trägt. Der Umriß 23 eines Ausschnittes der Seitenwände entspricht der Umrißform des Profiles 2. In die Frontwand 20 ist eine Aufnahmebüchse 24 für einen Anschlußstecker 25 eingesetzt. Die entsprechende, in einer Verdickung 26, an der Wandung 20 vorgesehene Aufnahmeöffnung kann von Haus aus vorgesehen oder nach einer Sollbruchstelle ausbrechbar sein, wobei Sollbruchstellen Verwendung finden können, die die Aufnahme verschieden großer Dosen ermöglichen. Schließlich ist an der Wandung 20 noch der Abdeckschenkel 15a nachgeformt.

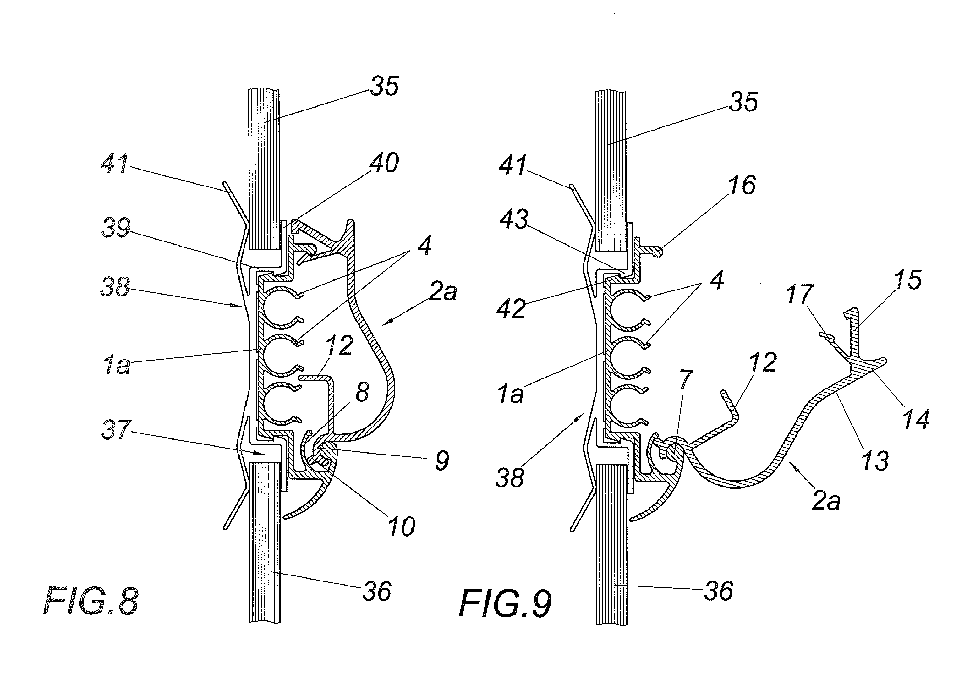

Die Fig. 5 - 7 zeigen eine im Zuge einer Befestigungsanordnung vorgesehene Umleitung um eine Türöffnung. Dabei sind Befestigungsanordnungen herkömmlicher Bauweise, von denen nur die Abdeckprofile 2 sichtbar sind, bis nahe an den Rand einer in der Türöffnung angebrachten Zarge 27 herangeführt, wobei zwischen dem Ende der Befestigungsanordnung 2 und der Zarge 27 eine die Umleitung in eine Sonderform 28 der Befestigungsanordnung bestimmende Sonderform eines Eckprofiles 29 vorgesehen ist.

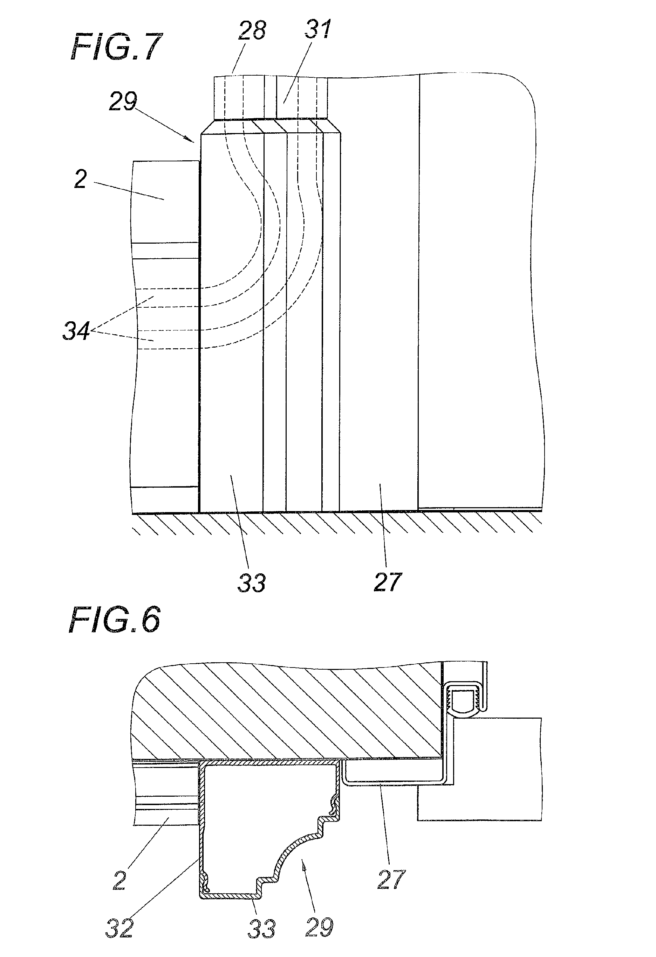

Die Sonderform 28 der Befestigungsanordnung zeigt ein Winkelprofil 30, an dem die Kabelhalterungen 4 realisiert sind. Dieses Winkelprofil ist durch ein aufschnappbares Zierprofil 31 zu einem Kabelschacht ergänzt. Oben sind die Profile 30, 31 auf Gehrung zugeschnitten und führen so die in ihnen verlegten Kabel zum zweiten unteren Rand der Türöffnung. Das Eckprofil 29 ist in Anlehnung an die Sonderform der Befestigungsanordnung ausgestaltet und besitzt ebenfalls ein Winkelprofil 32 und ein aufschnappbares Zierprofil 33. Gegen die anschließende Befestigungsanordnung 2 ist im Profil 32 eine Öffnung vorgesehen bzw. ausbrechbar. Innerhalb des Eckprofiles 29 werden die Kabel 34 (Fig. 7) im weichen Bogen aus der Befestigungsanordnung 2 in die Befestigungsanordnung 28 übergeleitet.

Schließlich ist bei der Sonderausführung nach den Fig. 8 und 9 zwischen zwei relativ dünnen Wandplatten 35, 36 ein Schlitz 37 offen gehalten. In diesen Schlitz werden abstandsweise insbesondere aus Metall gefertigte Halteelemente 38 eingehängt, die einen Mittelteil 39 mit Rinnenprofil, Stützflansche 40, welche die Schlitzränder übergreifen und federnde Stützschenkel 41 aufweisen. Die Länge der Halteelemente 38 wird kleiner als die Breite des Schlitzes 37 gewählt, so daß diese Halteelemente 38 mit parallel zur Schlitzlängsrichtung verlaufenden Stützschenkeln 41 durch den Schlitz 37 eingefädelt und dann durch Verdrehen um 90° in die in den Fig. 8 und 9 sichtbare Haltestellung verbracht werden können. Das Halteprofil 1a besitzt ebenfalls im Aufnahmebereich der Klemmhalterungen 4 Rinnenform und nach außen übergreifende Randflansche, wobei die Rinnenseitenschenkel Rasten 42 angeformt haben, in die Gegenrasten 43 der Halteelemente 38 eingreifen können, so daß das Halteprofil 1a einfach für die Befestigung in die Halteelemente 38 eingeschnappt wird.

## Patentansprüche

1. Befestigungsanordnung für Kabel, bestehend aus einem Halterungsprofil (1) mit rinnenförmigen Klemm- oder Einlegehalterungen (4) für jedes Kabel und einem das Halterungsprofil (1) zu einem geschlossenen Hohlkörper in Form einer Leiste ergänzenden, aufschnappbaren Abdeckprofil (2), **dadurch gekennzeichnet, daß** das Abdeckprofil (2, 2a) an seinem einen Rand mit einer angepaßten Aufnahme (9) unter Bildung einer Schwenkverbindung in eine runde Endverdickung (7) eines vorstehenden Randflansches (6) des über Befestigungselemente an einer Wand, Wandverkleidung oder Raumdecke befestigbaren Halterungsprofiles (1, 1a) einhängbar und in der Schließstellung im anderen Randbereich über federnde Rastschenkel (16, 17) der Schnapphalterung am Halterungsprofil (1, 1a) befestigbar ist, und daß bei einer um Ecken führenden Befestigungsanordnung an die bis zu den Eckbereichen herangeführten Halterungsprofile (1) Eckprofile (29) anschließbar, insbesondere ansteckbar sind, bei welchen die Kabel (34) im Bogen um die Ecke geführt werden können und für die eigene, an die Abdeckprofile anschließende Eckabdeckungen (33) vorgesehen sind.

2. Befestigungsanordnung nach Anspruch 1, **dadurch gekennzeichnet, daß** für die Anbringung von Schaltern (25), Steckdosen, Steckerbuchsen, Kabelausleitungen u. dgl. Halteelemente (18) vorgesehen sind, die in ihrem Anbringungsbereich das Abdeckprofil (2) ersetzen, ausgehend von dem die Endverdickung (7) aufweisenden Randbereich des Halteprofiles (1), dieses Halteprofil (1) vorzugsweise an der anderen Seite überragend einen zum Halteprofil (1) offenen Hohlraum umschließen, mit einer Aufnahme (9a) in die Endverdickung (7) des Randflansches (6) des Halteprofiles (1) schwenkbar einhängbar sind, in Seitenwänden (21) an die Außenkonturen des Abdeckprofiles (2) angepaßte Ausschnitte (23) mit Rastvorsprüngen (17a) der Schnapphalterung aufweisen und wenigstens eine z. B. nach einer Sollbruchstelle freigebbare Montageöffnung zur Anbringung des Schalters (25) od. dgl. bzw. einer für die Aufnahme des Schalters od. dgl. bestimmten Montagedose aufweisen oder mit einer eine derartige Dose ersetzenden, nach außen offenen Montagevertiefung versehen sind (Fig. 1 -3).

3. Befestigungsanordnung nach Anspruch 2, **dadurch gekennzeichnet, daß** die Seitenwände (21) des Halteelementes (18) die Grundform etwa rechtwinkeliger Dreiecke aufweisen, die in der Endmontagestellung mit der Hypothenusenseite zum Halteprofil (1) weisen und dieses vorzugsweise nach oben überragen, wobei an die längere vom unteren Rand ausgehende Kathetenseite (19) eine Deckwand (20) anschließt und an der von dieser zur Anbringungswand ansteigenden zweiten Deckwand (20) die Montageöffnung bzw. -vertiefung vorgesehen ist.

4. Befestigungsanordnung nach einem der Ansprüche 1 bis 3, **dadurch gekennzeichnet, daß** zur Erzielung einer verringerten Breite, z. B. im Bereich von Kabelumleitungen und Türöffnungen eine Sonderform (28) der Befestigungsanordnung vorgesehen ist, bei der das Halterungsprofil (30) die Grundform eines Winkelprofiles mit an den Profilschenkeln angebrachten Kabelhalterungen (4) aufweist, das aufschnappbare Abdeckporifl (31) dieses Halterungsprofil (30) zu einer hohlen Leiste, insbesondere Zierleiste, ergänzt und für eine allfällige Eckverbindung mit einer die Normalform aufweisenden Befestigungsanordnung (2) eine Sonderform des Eckprofiles (29) mit an den Anschlußseiten der beiden Abschnitte (2, 28) der Befestigungsanordnungen an deren Querschnitt- bzw. Öffnungsform angepaßte Anschlüsse vorgesehen sind.

5. Befestigungsanordnung nach Anspruch 4, **dadurch gekennzeichnet, daß** bei im Zuge der Sonderform vorgesehenen Eckumleitungen (28) die Halterungsund Abdeckprofile (30, 31) auf Gehrung zugeschnitten stoßen, vorzugsweise aber die Kabelhalterungen (4) in der Nähe der Ecke wenigstens teilweise entfernt sind.

6. Befestigungsanordnung nach einem der Ansprüche 1 bis 3, **dadurch gekennzeichnet, daß** für eine in Wandungsschlitze (37) wenigstens teilweise versenkte Anbringung der Befestigungsanordnung (1a, 2a) das Halterungsprofil (1a) als Rinnenprofil mit auskragenden, die Teile der Schwenkverbindung (7, 10) und Schnapphalterung (16) tragenden, am Schlitzrand aufliegenden Randflanschen ausgebildet ist, wobei die Klemm- oder Einlegehalterungen (4) für die Kabel am Rinnenboden angebracht sind.

7. Befestigungsanordnung nach Anspruch 6, **dadurch gekennzeichnet, daß** an der Außenseite der Rinnenseitenschenkel des Halterungsprofiles (1a) Rastvorsprünge (42) zum abstandsweisen Aufschnappen auf im Wandungsschlitz (37) vormontierbare Halteelemente (38) vorgesehen sind.

8. Befestigungsanordnung nach Anspruch 7, **dadurch gekennzeichnet, daß** für die Anbringung der Befestigungsanordnung in zwischen relativ dünnen, rückseitig freigestellten Wandelementen (35, 36) gebildeten Schlitzen die vorgesehenen Halteelemente (38) selbst eine an die Außenform des Rinnenprofiles (1a) angepaßte Profilform mit Gegenrasten (42) für die Rastvorsprünge (43) und angeformte, die Rückseite der Wandelemente übergreifenden federnden Stützschenkel (41) aufweisen.
